# EUROPEAN PATENT APPLICATION

(11) **EP 4 525 453 A1**
(43) Date of publication of application: **19.03.2025**
(21) Application number: 23197485.8
(22) Date of filing: 14.09.2023
(51) Int. Cl.: H04N 21/231, H04N 21/433, H04N 21/44, H04N 21/4402, H04N 21/2343

(54) **PLAYOUT DEVICE AND A METHOD FOR PLAYING OUT BROADCAST CONTENT**

(71) Applicant: EVS Broadcast Equipment SA, 4102 Seraing (BE)
(72) Inventor: Barnich, Olivier, 4000 Liège (BE); Degbomont, Jean-François, 4970 Stavelot (BE); Hick, Michel, 4030 Grivegnée (BE); Milants, Jean-François, 4102 Ougrée (BE); Michel, Nicolas, 4400 Ivoz-Ramet (BE); Bastings, Michaël, 4400 Flémalle (BE)
(74) Representative: Rossmanith, Manfred

(57) **Abstract**

A playout device (201) for a broadcast production system (200) is proposed. The broadcast production system comprises a storage device (101) for video streams and a control device (104) for receiving input from a user for selecting a stored video stream to be played out and for selecting a replay speed and direction for the played out video stream. The control device (104) translates the user input into control commands to set corresponding playout parameters for the playout device (201) determining at least which stored video stream is to be played out at what playout speed and playout direction. The playout device comprises a fetcher (110) and a processor (111). The fetcher (110) requests from the storage device (101) images of the selected stored video stream. The fetcher is associated with a fetcher cache memory (203) making a number of images of the stored video stream available for the processor (111). The processor is associated with a processor cache memory (303) containing at least one processed image for output by the playout device. Furthermore, a method for operating the proposed playout device is suggested.

## Description

### Field

The present disclosure relates to a playout device and a method for playing out broadcast content, in particular video content.

### Background

A playout device is a central piece of technology used in the broadcasting industry for broadcasting content directly to one or several transmission station(s) and to recipients inside the studio, such as the production director or the production team. The playout device enables simultaneously monitoring program content and video streams from various sources such as cameras and storage devices where video clips are stored. Cameras provide video streams either encoded or unencoded while video clips most of the times are stored in encoded format on the storage devices. Based on the encoded or unencoded media streams, the playout device produces one or several streams of unencoded video, which are provided to a production mixer. In the following the terms "encoded" and "unencoded" video are to be understood in a broad sense and in particular encompass "compressed" and "uncompressed" video, respectively. The production mixer generates composed images as program output stream and a multi-view signal provided to a multi-view video wall enabling an overview for the production team of currently available video streams. Typically, the playout device loops through the camera streams while it needs to download the stored video clips from a storage device such as a disk array. The loop through of camera signals through the playout device is known for example from EP 17 153 840.8 and is not essential for the present disclosure. Therefore, the loop through of camera signals through the playout devices is not described in any further detail for the sake of conciseness and clarity of the present disclosure.

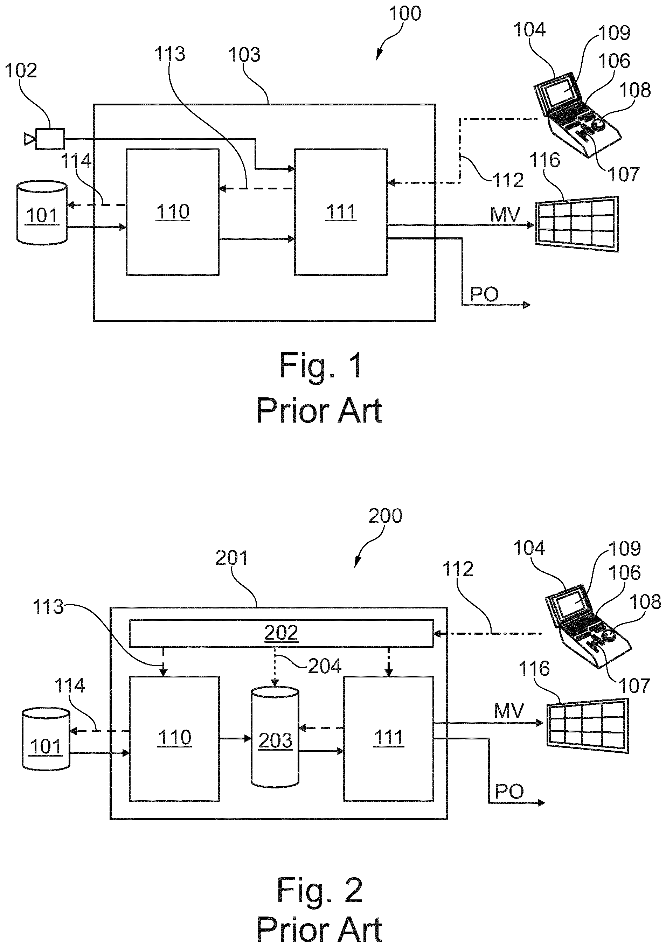

Figure 1 displays a simplified architecture for a conventional production system 100 for broadcast content. Broadcast content (briefly: content) refers to video and/or audio content which are encoded or unencoded signal streams (briefly: signals). The production system 100 comprises signal sources such as a storage device 101 and a camera 102 providing signal streams to a playout device 103, which is communicatively connected with the signal sources 101, 102. It is noted that in some embodiments the storage 101 and the camera 102 are connected by a wide area network to the playout device 103 as it is the case for instance in distributed video production systems in which different components of the system are not in the same location. It is further noted that even though only a single exemplary storage device 101 and camera 102 are illustrated in Figure 1, in other embodiments a plurality of storage devices 101 and cameras 102 may be present. The playout device 103 is controlled by means of a control device 104, which is equipped with control elements such as buttons 106, a T-bar 107 and a jog dial 108. The control elements 106-108 enable an operator to select a video clip stored on the storage device 101 and to define how it is to be replayed. The operator can watch the selected video clip on a display 109. For instance, by means of the jog dial 108 the operator can browse through the selected video clip and define an entry and exit point for replay. With the T-bar 107 the operator can adjust the replay speed of the video clip. The entirety of the information entered by the user into the control device 104 is referred to as replay information. For example, the selected video clip can be replayed in slow-motion allowing the viewers to watch an interesting scene in greater detail. This is particularly interesting for sports events when critical scenes happen in only a few seconds making it very difficult for viewers to really appreciate the scene.

To implement this functionality, the playout device 103 accommodates two functional blocks, namely a fetcher 110 and a processor 111. The processor 111 receives control commands symbolized by arrow 112. The control commands 112 convey the mentioned replay information from the control device 104. The processor 111 submits a corresponding command 113 to the fetcher 110 which provides another command 114 to the storage device 101 to request the desired video clip from the storage device 101. The storage device 101 transfers the requested video clip as image stream to the fetcher 110, and from the fetcher 110 to the processor 111. Typically, the stored video clip is encoded. Therefore, the processor 111 decodes the video stream and generates a corresponding program output stream PO and a multi-view stream MV provided to a multi-view monitor wall 116. The multi-view stream MV also contains video streams provided by cameras 102 supplied directly to the processor 111. In an alternative embodiment the video streams provided by cameras 102 also pass through the fetcher 110 (not shown in Figure 1).

The described conventional playout device 103 is simple and offers only a limited performance because any latency while fetching video clips from the storage device 101, downloading from a network, or delays caused by decoding of the image stream will result in a bad output fluidity of the program output stream PO. Furthermore, any change in playout speed or playout direction will result in an output lag, i.e. a delay that is visible in the program output stream PO.

The video production system 200 shown in Figure 2 addresses at least partially some of the shortcomings of the video production system 100 of Figure 1 with a modified playout device 201. In order not to overload Figure 2 and all following figures, cameras are not shown.

Compared with the playout device 103 of Figure 1, the playout device 201 comprises a pre-loader 202 and a fetcher cache memory 203. Control commands 112 from the control device 104 are received at the pre-loader 202 which translates the control commands 112, firstly, into an inspection signal 204 to inspect the contents of the fetcher cache memory 203, secondly, into commands 113 to the fetcher 110, and thirdly into commands 206 to the processor 111. The pre-loader 202 intelligently fills the fetcher cache memory 203 based on images already stored in the fetcher cache memory, received control commands 112 from control device 104, prefetch heuristics, and delivery speed of the mass storage device 101, and the state of the fetcher cache memory 203. All these measures serve the goal of making images available in the fetcher cache memory which are most likely to be used next. The pre-loader 202 decides about a preload window, i.e. how many frames should be stored in the fetcher cache memory and timestamps of the images in the preload window and requests to the fetcher 110 to fetch the desired video frames/images. The processor 111 sends a corresponding command signal to the fetcher cache memory 203 to receive cached images for processing such as decoding, format transformation, applying video effects, and/or a combination of those.

The aspect of a cache memory in a broadcast production system is disclosed for instance in EP 3 574 653 A1.

The fetcher cache memory 203 makes the playout device 201 resilient to acquisition jitter caused by variable latency in fetching video frames from the storage device 101 including jitter introduced by a network connection. However, the playout device 201 does not provide any resilience regarding processing jitter, i.e. jitter generated by variable processing times of the video frames. Specifically, in current playout devices the processing is executed on-the-fly, i.e. just when the resulting image is needed by the application. For instance, the resulting image is an image composed of images from several streams or clips that may be reformatted, and color corrected. The processor 111 generates this image on request of the operator. However, if the processing takes too much time because the process is too complex or if there is not enough processing power available at a given moment, the processor 111 is not able to provide a processed image for the program output PO stream and/or the multi-view stream in time, which will introduce a highly undesirable lag (delay) in these streams.

Taking this as a starting point, there remains a desire for a playout device that overcomes or at least improves some or all of the shortcomings of existing playout devices mentioned at the outset.

### Summary

According to a first aspect the present disclosure suggests a playout device for a broadcast production system. The broadcast production system comprises a storage device for video streams and a control device for receiving input from a user for selecting a stored video stream to be played out and for selecting a replay speed and replay direction for the played out video stream. The control device translates the user input into control commands to set corresponding playout parameters for the playout device determining at least which stored video stream is to be played out at what playout speed and replay direction. The playout device comprises a fetcher and a processor. The fetcher requests from the storage device images of the selected stored video stream. The fetcher is associated with a fetcher cache memory making a number of images of the stored video stream available for the processor. The processor is associated with a processor cache memory containing at least one processed image for output by the playout device.

The architecture of the playout device makes it resilient against jitter. Jitter is a variable delay between individual video frames wherein the delay is introduced by retrieving video frames from the storage device and/or by processing of the video frames in the processor. In one embodiment the size of the fetcher cache memory is larger than the processor cache memory.

In an advantageous embodiment the fetcher cache memory and the processor cache memory operate at different sampling rates.

Different sample rates of the fetcher cache memory and to the processor cache memory enable to playout stored video streams having a first frame rate at a different second frame rate without involving a transcoding step. That saves processing resources in the playout device which are limited.

Preferably, the playout device comprises a preload orchestrator receiving the control commands from the control device. The preload orchestrator is configured to
- execute an algorithm to generate inspect signals for the fetcher and processor cache memories to determine their contents,
- send command signals to the fetcher as a function of the determined contents of the fetcher cache memory to request images from the storage device, which are likely to be needed next by the processor, and
- send command signals to the processor as a function of the determined contents of the processor cache memory to request from the processor to process images which are played out next.

For effectively managing the fetcher and the processor cache memory the preload orchestrator inspects the contents of the fetcher and processor cache memory. Based on already available images in the cache memories the requests to the fetcher and the processor are adapted accordingly, to download and process, respectively, only those images which are really needed in a next step

In a useful embodiment the fetcher cache memory is located in a signal flow direction upstream from the processor cache memory.

The proposed configuration of locating the fetcher cache memory upstream from the processor cache memory enables effective use of memory resources.

With advantage the processor comprises a plurality of processing elements executing software. Each processing element performs an elementary service providing one step of a desired processing functionality. A concatenation of elementary services forms a processing pipeline implementing the desired processing functionality. Each processing element is associated with its own processing cache memory.

For more implementing complex processing functions, it has been found to be useful to delegate individual processing steps to individual processors or processor elements to enhance the processing power. In this way, the processing power of the playout device becomes at the same time scalable by simply increasing the number of processor elements. The processing element is a piece of hardware and executes software to implement an elementary service. Since every processing element is apt for introducing processing jitter, each processing element is associated with its own processing cache memory that permits to compensate jitter introduced by each processing element. As a result, even this more complex architecture becomes resilient against jitter.

In this case the playout device comprises an input of the processing pipeline to receive data from the storage device and an output of the processing pipeline for outputting processed video data. The data flow from the input to the output of the processing pipeline defines a signal flow direction. Each processing cache memory is arranged downstream in signal flow direction relative to its associated processing element.

Advantageously, the cache memory of each processing level reduces jitter introduced by the processing element of this processing level.

In a further embodiment the first processing element in signal flow direction is configured to request data from the fetcher cache memory.

Most conveniently, the first processing element requests data from the fetcher cache memory and hands-down processed data to the succeeding processing cache memory. At each step processing jitter is compensated by the associated processor cache memory.

In an advantageous embodiment each processing element succeeding the first processing element in signal flow direction is configured to request data from the next upstream processing cache memory.

In this way it is possible to compensate jitter on each processing level, wherein the processing level is formed by the individual processing elements. This configuration assures that input data are available in a timely fashion when they are needed by the succeeding processing element to perform an elementary service.

According to a second aspect the present disclosure suggests a method for playout of video streams by a playout device according to the first aspect of the present disclosure. The method comprises
- preloading in the fetcher cache memory images of a stored video stream from the storage device, wherein the stored video stream has a first frame rate;
- generating an output video stream including the requested stored video stream at a predetermined output frame rate for playout, wherein the output frame rate is different from the first frame rate or equal to the first frame rate.

The playout/output frame rate can be different from the first frame rate of the stored video stream. These eliminates the need for a rate transformation stage in the processing pipeline. The method enables playout synchronization of video streams having different frame rates for example in mosaic mode. Depending on the frame rate, some images of the stored video stream are repeated or skipped to realize the output video stream at the predetermined output frame rate.

In a preferred embodiment the method further comprises executing an algorithm for predicting images that are needed next in the generated output video stream.

Predicting images is very useful to make sure that in the cache memories images are stored which are needed in a next step along the processing pipeline.

In yet another embodiment the method comprises
- preloading the predicted images into the fetcher cache memory and/or
- processing the predicted images to be loaded into the processing cache memory.

The prediction of images which are needed next permits preloading and/or processing the predicted images to make them available for the next processing step.

In a further embodiment the method comprises keeping preloaded images in the fetcher cache memory that have not yet been utilized in the composed output video stream.

This way of managing the fetcher cache memory contents avoids unnecessary loading and discarding images in the cache memory and, hence, contributes to saving resources of the playout device.

In yet another embodiment the method further comprises preloading in the fetcher cache memory one or several images of the stored video stream preceding and succeeding a currently displayed image of the stored video stream in case the replay of the stored video stream is paused.

Since user inputs cannot be predicted, images in the past and in the future of a currently displayed image are preloaded in anticipation of a new user input, in particular a user input regarding forward or reverse replay direction of the video stream.

In a further embodiment the method comprises repeating or skipping images of the stored video stream to adapt a flow of images of the stored video stream at the first frame rate to the output frame rate.

### Brief description of the drawings

Exemplary embodiments of the present disclosure are illustrated in the drawings and are explained in more detail in the following description. In the figures, the same or similar elements are referenced with the same or similar reference signs. It shows:
- Fig. 1: a schematic diagram illustrating the architecture of a known production system with a playout device;
- Fig. 2: a schematic diagram illustrating the architecture of another known production system with a playout device;
- Fig. 3: a schematic block diagram illustrating the architecture of production system with a playout device according to the present disclosure;
- Fig. 4: a schematic block diagram illustrating the architecture of production system with another playout device according to the present disclosure;
- Fig. 5: a time diagram;
- Figs.6A,B: time diagrams with different playout rates;
- Fig. 7A-C: time diagrams illustrating the concept of different sizes of preload windows;
- Fig. 8: a video stream with different sampling rates;
- Fig. 9: a time diagram illustrating reverse replay;
- Fig. 10: a time diagram illustrating browsing through a video clip; and
- Figs. 11: a time diagram showing a paused replay.

In the figures the same or similar components are labelled with the same or similar reference signs.

### Detailed description

It is noted that in the following description and the figures the terms video stream, media stream, media, and content are used synonymously for digital video and/or audio data and/or meta data.

### Software Player

The embodiments described below comprise separate devices to facilitate the understanding of different functional groups of the present disclosure. However, it is to be understood that some devices may very well be integrated in a single device. In the following a detailed description of embodiments of the present invention is provided.

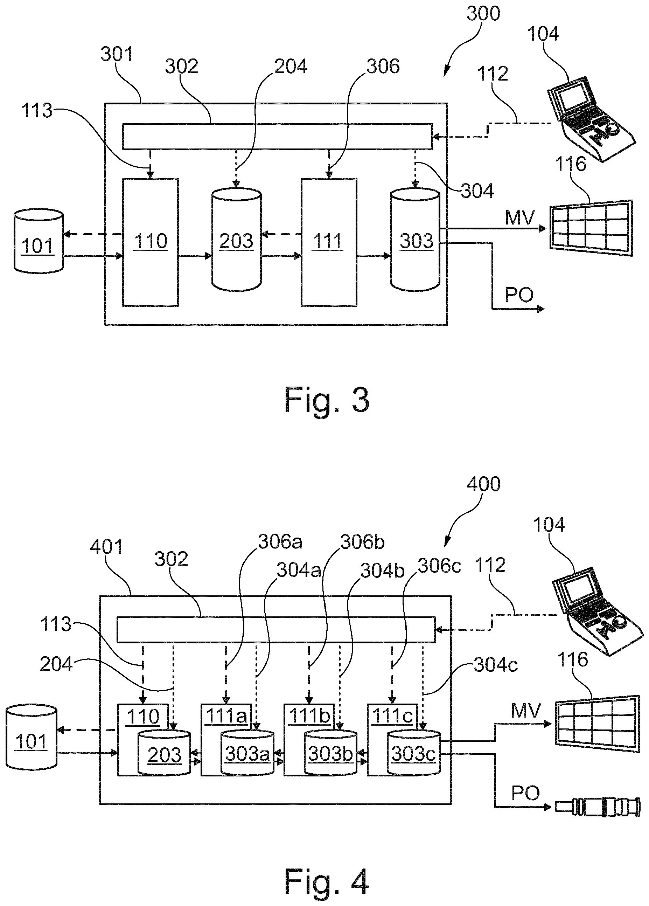

Figure 3 schematically illustrates the architecture of a production system 300 comprising a first embodiment of a playout device 301 according to the present disclosure. Compared with the playout device 201 of Figure 2, a preload orchestrator 302 replaces the pre-loader 202 of the playout device 201. In addition to that, a further processor cache memory associated with the processor 111 is provided. Control commands 112 from the control device 104 are received at the preload orchestrator 302, which translates the control commands 112, firstly, into the inspection signal 204 to inspect the contents of the fetcher cache memory 203, and, secondly, into commands 113 to the fetcher 110.With regard to the fetcher 110 and the fetcher cache memory 203, the preload orchestrator 302 performs the same operations as the pre-loader 202 in the playout device 201. Therefore, a description of these functions is not repeated. In addition to that, the preload orchestrator 302 sends an inspection signal 304 to inspect the contents of a processor cache memory 303. Depending on the current content of the processor cache memory 303 the preload orchestrator converts control commands 112 from the control device into adapted commands 306 submitted to the processor 111. The preload orchestrator 302 also sends an inspection signal 304 to inspect the contents of the processor cache memory 303. The processor cache memory 303 stores processed images to be included in the program output stream PO and a multi-view stream MV. It is noted that the fetcher cache memory 203 associated with the fetcher 110 stores images in an encoded format while the processor cache memory 303 stores processed images, which are unencoded. The preload orchestrator 302 manages the contents of the processor cache memory 303 in a similar way like the contents of the fetcher cache memory 203. For instance, the preload orchestrator 302 intelligently fills the processor cache memory 303 based on images already stored, commands received from control device 104, and prefetch heuristics. The fetcher cache memory 203 is associated with the acquisition level and the processor cache memory 303 is associated with the processing level of the playout device 301.

The fetcher cache memory 203 stores typically 50 frames of encoded images, i.e. one second of the video stream if the frame rate of the video clip is 50 Hz while the processor cache memory 303 stores for instance 5 frames or images in advance. The reason for this asymmetry is that the jitter between the storage device 101 and the fetcher 110 is greater than the processing jitter introduced by the processor 111. At the same time the bandwidth between the storage device 101 and the fetcher 110 is more readily available ("cheaper") than processing power that would be required to generate more processed images to be stored in the processor cache memory 303. In most use cases, the 5 frames of processed images in the processor cache memory 303 are sufficient to make the playout device 301 resilient against processing jitter. Therefore, storing more than 5 processed images in the processor cache memory 303 would be a waste of processing resources.

It is noted that 50 stored frames in the fetcher cache memory and 5 processed images stored in the processor cache memory are just examples. In other embodiments another number of frames or images are stored in the cache memories 203 and 303, respectively. Practical upper limits are set by the available memory, bandwidth, and processing resources and practical lower limits by the ability to make the playout device 301 resilient against jitter.

In conclusion, one can say that jitter introduced by loading frames from the storage device 101 (acquisition) is compensated by means of the fetcher cache memory 203 on the acquisition level and jitter introduced by processing the encoded frames or other processing functions is compensated by processor cache memory 303 on the processing level. The architecture of playout device enables cache memories 203 and 303 to operate at different sample rates, but they do not have to be different. One reason would be that the storage device 101 may pack multiple samples together (e.g. interlaced fields, several images encoded as a single block etc.) and the processing restores the original rate of the stream. Another reason for different sample rates of the cache memories 203 and 303 would be that the processor 111 generates more images than there exist in a source stream from the storage device 101 or the camera 102 as it is the case when slow motion is generated from a normal camera stream as it is described for example in EP 22 204 173.3. For instance, a video clip is recorded in the storage device with a frame rate of 50 Hz. The processor calculates one additional intermediate frame between every two original frames. As a result, a new stream with a frame rate of 100 Hz is generated and stored in the processor cache memory and played out at 50 Hz to create a slow-motion stream.

In addition to that, the additional processor cache memory 303 on the processing level enables performance optimizations within the playout device such as parallelization of processing and hardware acceleration for instance.

Figure 4 schematically shows the architecture of a further production system 400 comprising a second embodiment of the playout device 401 according to the present disclosure. The playout device 401 comprises three processors 111a-111c to enhance the processing power of the playout device 401. Each processor 111a-111c implements one elementary service forming a processing step of a desired processing functionality. Each elementary service forms a processing level for a specific processing step. A concatenation of elementary services realizes a desired broadcast functionality to create a composite image for the program output stream. For example, different processing steps are delegated to one of the processors 111a-111c resulting in faster processing of images. However, each processing step is a potential source for jitter. In order to cope with that problem each one of the processors 111a-111c is associated with a processor cache memory 303a-303c, respectively. Each processor 111a-111c communicates with the cache memory upstream with regard to the signal flow through the playout device 401 from acquisition of the video frames towards the final processing step to receive the required frames from the previous stage. It is noted that processor 111a is the first processor in signal flow direction of the processing pipeline.

Other embodiments comprise only two or more than three processors. By increasing or decreasing the number of processors the processing power of the playout device can be adapted to specific applications, in particular when the playout device is a software player, and the processors are realized as processing elements.

The playout device 401 realizes the same advantages as the playout device 301. In addition to that, the concept can be extended to playout devices with an arbitrary number of processing stages such as fetching, coding, compositing, applying video effects and others, to compensate for specific hardware jitter caused by input/output, memory, CPU, and GPU operations. Furthermore, each processor cache memory 303a-303c can be adapted to meet specific hardware jitter and bandwidth requirements for each processing level. Obviously, this concept is applicable to playout devices with fewer or more than three processing levels.

In modern broadcast studios broadcast equipment devices performing a specific functionality such as encoding, decoding, color correction, reformatting, and applying video effects are realized as software components running on COTS (Customer Off The Shelf) hardware. Each of its functionalities is achieved by using a specific piece of software that is assembled from reusable functional software blocks and that can run on any compatible hardware platform. New functionalities can be provided quickly by composing existing functional software blocks.

In general terms, a specific functionality or functional service offered by the proposed video playout device is designed as a pipeline. It is noted that in some embodiments the playout device integrates a production server. The server functionalities are also implemented as software running on the same or different hardware than the rest of the processing pipeline.

At the entry of the pipeline the video production server ingests a stream generated by an acquisition or storage device. At the end of the pipeline a stream is played out. In between elementary services are applied upon the stream to provide for the desired functionality. An elementary service is a video processing function executed by one or more processing elements and provides one step of the desired processing functionality. A processing element is a piece of hardware, for example a central processing unit (CPU) or a graphical processing unit (GPU) or a portion of it. It depends on the nature and complexity of the processing element on what kind of hardware it is mapped. The processing element is the physical basis to perform an elementary service. In addition to that, the processing element includes an I/O module.

The processing elements process an input stream to generate an output stream, wherein the streams contain audio and/or video signals. Examples of basic elementary services are storing, encoding, performing a mixing effect etc. consequently, the above-mentioned pipeline can be considered as a concatenation of elementary services.

Thus, in one embodiment the functionalities of the playout devices 301, 401 are implemented as software on general-purpose hardware. In this sense the playout devices 301, 401 can be considered as software players. The playout devices 301, 401 are capable of rate agnostic playout, which means that regardless of the frame rate of the stored video clip the playout devices 301, 401 are capable to output at any other frame rate selected by an operator. In the following the term "player" will be used for the sake of brevity for any playout device according to the present disclosure.

### Rate-agnostic playout

In the following it will be explained how rate agnostic playout of stored video clips is realized by the player according to the present disclosure.

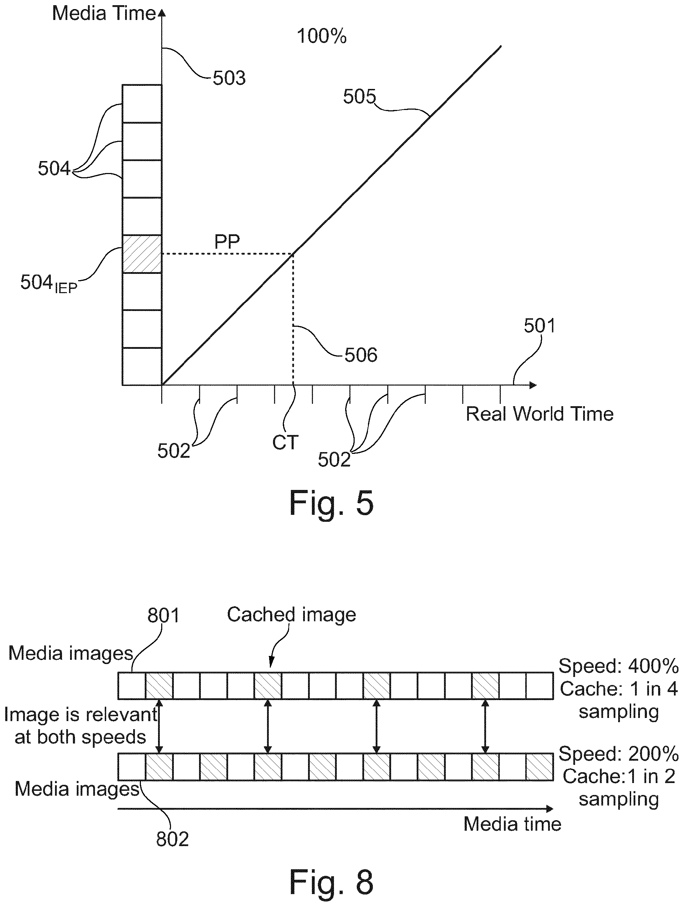

Figure 5 shows a time diagram. Abscissa 501 in the diagram represents the real-world time, i.e. the physical time at any given moment. The ticks 502 on the abscissa delineate time intervals corresponding to the display duration of one image in the video output stream played out by the player. The length of time intervals corresponds to the frame rate of the video output stream. Ordinate 503 represents the evolution of time of the stored video clip, briefly referred to as "media time". Likewise, the distance between two boxes 504 corresponds to the frame rate of the stored video stream. Each box 504 on the ordinate 503 symbolizes one image of the stored video clip. A given moment in the real-world time is indicated as vertical dotted line 506 and corresponds to the current time CT. At the current time CT, the player is at a position in the video stream represented by the boxes 504 that is indicated by a horizontal line PP ("player position") and plays out the image symbolized as a hatched box 504_{ITP} ("image to play"). The image 504_{ITP} is displayed for instance on the multi-view monitor wall 116 or as part of a composite program output stream. The player position PP is selectable by a user operating the jog dial 108 enabling him to browse through video stream represented by the sequence of boxes 504. It is noted that the replay speed of the video output stream is at 100% of its normal replay speed, that means that the replay is not accelerated or decelerated. For instance, a stored video stream having a 50 Hz frame rate is replayed in such a manner that all its frames are made part of the output video stream exactly once, provided that the frame rate of the output video stream is also 50 Hz. As another example, should the frame rate of the output video stream be 100Hz and the frame rate of the stored video stream be 25 Hz, every frame of the stored video stream would be repeated four times in the output video stream. This is expressed by the label "100%" in Figure 5. A positive gradient of line 505 symbolizes the replay of the stored video stream in the direction as recorded and the amount of the gradient of the line 505 indicates the replay speed such that with increasing the replay speed the amount of the gradient increases and vice versa. However, in other embodiments the replay speed can be different in terms of amount, and it can also change its direction as it will be explained further below.

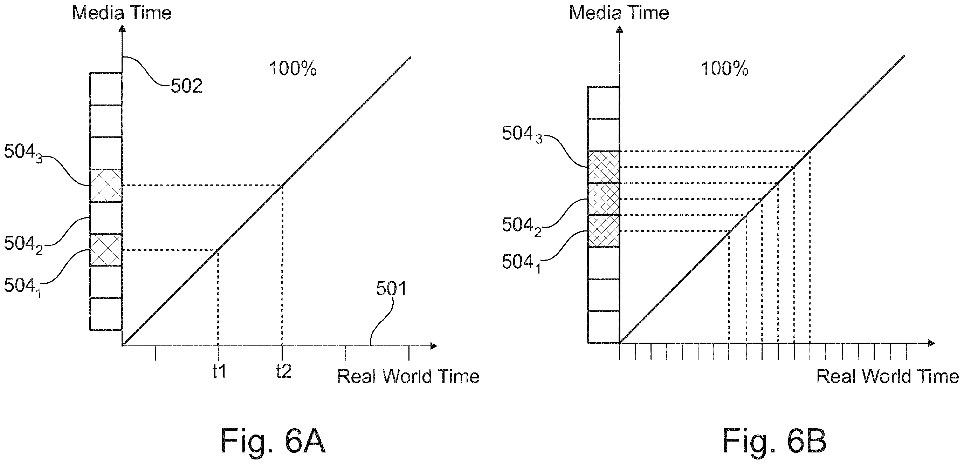

Figure 6A shows a time diagram similar to the time diagram shown in Figure 5. However, in Figure 6A the frame rate of the output video stream is lower (e.g. 50 Hz) than the frame rate of the stored video stream (e.g. 100 Hz), i.e. for a given replay time duration there are more images in the stored video stream then images to be displayed in the video stream when the video output stream is played out at. This problem is solved by skipping some images of the stored video stream. In the example shown in Figure 6A at time t₁ stored image 504, and at time t₂ stored image 504₃ is displayed. Stored image 504₂ is skipped, i.e. not part of the video output stream. In the specific example illustrated in Figure 6A the frame rate of the output video stream is half of the frame rate of the stored video stream. Therefore, every second image of the stored video stream is skipped. However, the concept of skipping some images of the stored video stream is applicable to any other ratio of the frame rates if the frame rate of the output video stream is smaller than the frame rate of the stored video stream. In spite of the skipped images, the diagram in Figure 6A is still labelled as 100% because is replayed at its regular speed, for instance in the case of a frame rate of 50 Hz of the output video stream, 50 images are displayed during one second. For different frame rates of the video output streams a different number of frames will be played out for every elapsed real word time second. For example, if the output video frame rate is 25Hz, 25 frames will be played out for each elapsed real-world time second, whatever the stored media frame rate.

The time diagram in Figure 6B shows another situation, namely the frame rate of the video output stream is a higher (e.g. 100 Hz) than the frame rate of the stored video stream (e.g. 50 Hz). That means, in the illustrated case the output frame rate is twice as high as the frame rate of the stored video. In consequence, the images 504₁ to 504₃ are displayed twice in the video output stream enabling the generation of a continuous output video stream with a higher frame rate than the frame rate of the stored video stream. Similarly, to the example shown in Figure 6A, the concept of repeating some images of the stored video stream is applicable to any other ratio of the frame rates if the frame rate of the output video stream (output frame rate) is higher than the frame rate of the stored video stream. Again, since the video output stream is replayed at its normal speed, the time diagram in Figure 6B is labelled as 100%.

The player treats time as pseudo-continuous and when the player clock reaches the moment when a new image must be displayed on the output, the player chooses the best fit among the images available in the final processor cache memory 303 or 303c. Depending on the ratios of the frame rate of the stored video stream and the output video stream some images of the stored video stream may be skipped and some may be displayed several times. The main advantages of this design are that the player can play content recorded in one rate to an output in another rate (e.g. PAL content on an NTSC output, high frame rate content on the low frame rate monitoring output etc.). This eliminates the need for a rate transformation stage in the processing pipeline. Furthermore, the player can play and synchronize several media for instance in a mosaic display mode even if the individual video streams have different rates.

### Predictive Preload

Predictive preload is related with an intelligent management of the cache memories of the playout device. Broadly speaking, a cache memory is provided for making sure that data are available without or with only minimum delay when they are needed. In the case of the playout device the data are image data. To this end, images are preloaded into an upstream cache memory to make the images available for the next downstream processing element when they are needed. In the following, the term "cache memory" means an exemplary representative of any of cache memories 203, 303, 303a-303c.

The number of images to be loaded into the cache memory is expressed as "preload window" corresponding to a time duration in the real-world time (abscissa in Figure 5). Alternatively, the size of preload window could also be expressed in terms of time duration in stored media time, number of stored images, or, advantageously in terms of number of images of the output video stream. Which definition of the size of the preload window is more convenient may depend on a specific application case. The size of the preload window is adjusted to the respective hardware jitter of the associated processing element in the sense that the playout device becomes resilient against jitter.

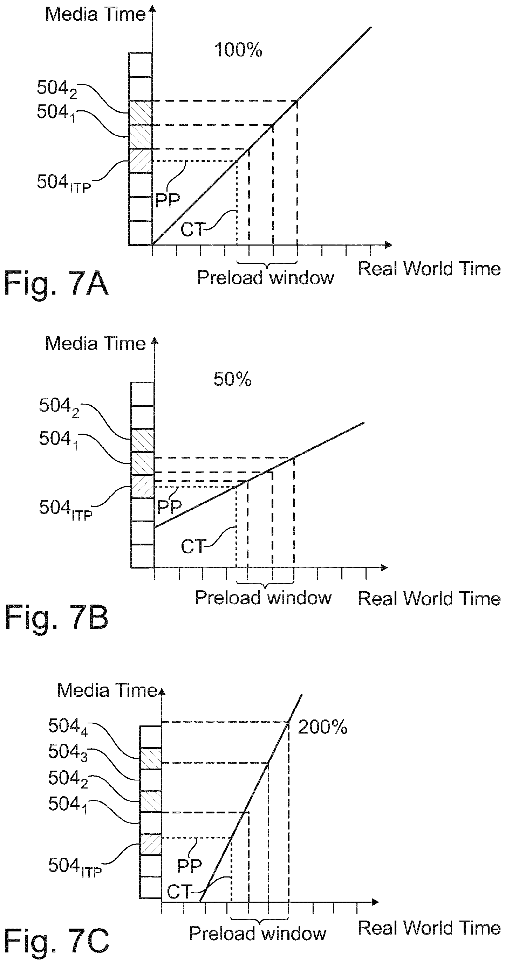

A simple situation is illustrated in time diagram in Figure 7A. The stored video stream with images 504 is played out at the same speed as it has been captured. That means one second of captured video stream corresponds to one second of replayed video stream. Within this terminology a replay speed of 50% means that one second of stored video stream corresponds to two seconds of replayed video stream. A replay speed of 200% means that one second of stored video stream corresponds to ½ second of replayed video stream. This is expressed by labels 100%, 50%, and 200% in Figures 7A to 7C, respectively. The replay speed of the playout device is determined according to control commands received from the control device 104.

A currently selected replay speed is used to predict which samples might be needed in the future. However, the size of the replay window is not a function of the replay speed. In the situation illustrated in Figure 7A the replay speed is set to 100% and the preload window covers a time interval from current time CT to include the display duration of two additional images, which means that two additional images 504₁ and 504₂ of the stored video stream are stored in the cache memory in addition to the currently displayed image 504_{ITP}.

Figure 7B displays a situation in which the replay speed is set to 50%. The preload window has the same size as in Figure 7A. Due to the reduced replay speed the currently displayed image 504_{ITP} of the stored video stream is displayed twice as well as the following image 504₁. Nevertheless, the same number of images are stored in the cache memory, namely the images 504_{ITP}, 504₁, and 504₂.

Finally, Figure 7C displays a situation in which the replay speed is set to 200%. The preload window has the same size as in Figure 7A. In this example the frame rate of the replayed output video stream and the stored video stream are the same. At a replay speed of the output video stream of 200% it is therefore not possible to display all images of the stored video stream. Based on the replay speed and the frame rate of the stored video stream an effective playout scheme is calculated. The preload policy of the preload orchestrator 302 chooses a subset of images of the stored video stream for display. Other images are not preloaded to save resources and to increase responsiveness of the playout device. In the example shown in Figure 7C images 504₂ and 504₄ are loaded into the cache memory in addition to the currently displayed image 504_{ITP} while images 504, and 504₃ are skipped.

It is noted that regardless of the playout speed of the replayed video stream the same number of images of the stored video stream are stored in the cache memory.

Responsiveness and performance of the playout device can be improved by utilizing images already stored in the cache memory for the next cache memory preload iteration. To achieve this goal the present disclosure suggests two different preload policies for different playout modes.

According to first operation mode, the playout device performs linear playout, the replay speed of the output video stream is constant for an extended period of time such us 10-60s or longer, without requiring much user interaction. In this operation mode the preload orchestrator 302 will ask for specific images to be preloaded into the cache memories 203 and 303.

According to a second operation mode, the user browses through the stored video stream and varies the replay speed of the output video stream a lot as well as the replay direction. In the second operation mode three different preload policies A-C are implemented.

Policy A is applied for playout speeds between -200% and 200%, which is a range of replay speeds that could be qualified as reasonable for a human eye. In this range of replay speeds, exact replay speeds (e.g. 66% or 131%) requested by the user are executed by the replay device without any automatic interference. I.e. the requested exact replay speeds are implemented as described with regard to Figures 7A-C.

Policy B is applied when the user selects replay speeds that are outside the range between -200% and 200%. Such replay speeds can be qualified as "very fast". In this range only playout speeds at steps of the power of 2 are offered, namely 200%, 400%, 800%, etc. The actually applied replay speed is chosen to be closest to the replay speed requested by the user. For instance, if the user asks for 550%, the replay speed is set to 400%, if user asks for 830%, the replay speed is set to 800%, etc. The idea behind this approach is that at these very fast speeds, the user is searching for a specific moment in time, and an exact replay speed as well as a nice output image does not matter for the user. The advantage of this approach is that it allows for recycling as much as possible current content of the cache when speed is changed, which will be explained in greater detail with reference to Figure 8.

Figure 8 illustrates two stored video streams 801, 802. The stored video stream 801 is replayed at a speed of 400% and thus, only one in four images are preloaded into the fetcher cache memory as it has been explained in connection with Figure 7C. The stored video stream 802 is replayed at a speed of 200% and thus, every second image is sampled to be preloaded in the fetcher cache memory. Assuming that the video streams 801, 802 are identical, Figure 8 corresponds to a change of the replay speed from 400% to 200%. Obviously when this change happens, half of the already preloaded images are still relevant. Specifically, every second image preloaded from video stream 802 has already been preloaded to replay video stream 801 at the replay speed of 400%. For other speed changes the same reasoning applies similarly.

Finally, policy C is applied when playout speed is so high or changes so drastically that the fetcher 110 is not capable of delivering images because of bandwidth limitations. In this situation the preload orchestrator 302 makes the fetcher cache memory to deliver an available image that is closest to the image requested by the user. At the same time the preload orchestrator 302 limits the number of new requests to the fetcher until a request queue decreases and things go back to normal. Policy C enables the playout device 300, 400 to stay responsive when the fetcher 110 is incapable of delivering images. Without implementing policy C, it can happen that at extremely high playout speeds such as 25600% (256 times faster than normal) by the time the image is requested, fetched and processed, it is no longer needed and is already "in the past" of the current playout position. At these extremely high playout speeds the user just wants to see something, not a precise image. Policy C is also applied when the storage device is not responding for any reason.

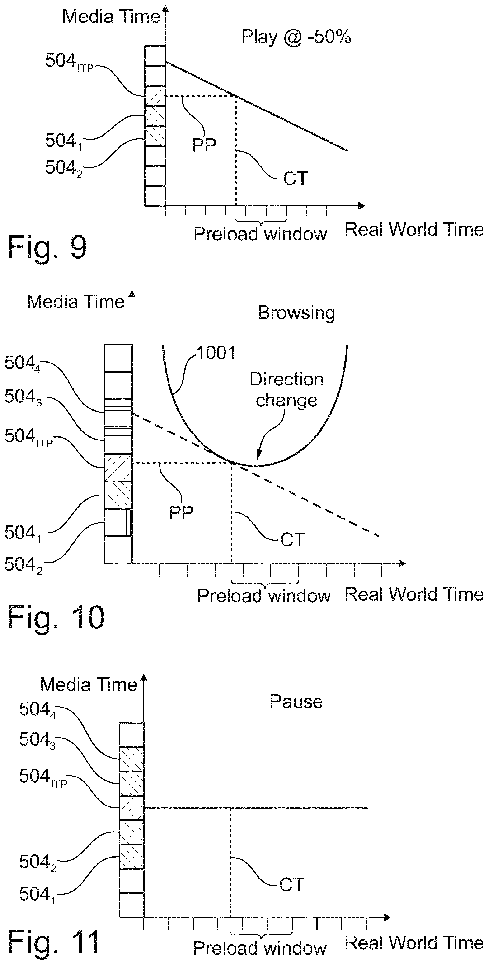

Figures 9-11 illustrate further preload strategies implemented by the preload orchestrator 302 in different replay situations.

Figure 9 shows a time diagram illustrating the situation that the stored video stream is replayed in the reverse direction at 50% of the normal replay speed. This is indicated with the label -50% in Figure 9. Apparently, the preload in reverse replay directions is performed in backward direction. That means that images 504₁ and 504₂ are preloaded. Since the replay speed is in terms of amount is only at the level of half of the normal replay speed, the image 504_{ITP} and the image 504, are repeated twice in the output video stream similarly to the situation shown in Figure 7B.

In browsing situations when a user browses through a stored video clip, it is very difficult to predict the next user input because the user browses in forward and backward direction through the video clip at different speeds. This is symbolized in Figure 10 by curve 1001 indicating the gradient of the replay speed continuously changing from a reverse replay direction towards a forward replay direction. When the gradient of curve 1001 changes from negative to positive it indicates that change in replay direction. In order to manage such a browsing situation, the prediction algorithm for preloading images into the cache memory is supplemented by additional rules. If images that were already preloaded in anticipation that these images would be used next are kept in the cache memory in case they are needed in the future. This situation can occur for example when the replay speed is instantaneously reduced, and a small number of images are actually sufficient to be preloaded. Specifically at the illustrated replay speed of -50% in Figure 10, it is sufficient that in addition to the currently replayed image 504_{ITP} the image 504, is preloaded. However, image 504₂ has already been preloaded when the replay speed was higher in previous moments. Even though at the current replay speed of -50% it would not be necessary to preload image 504₂. Nevertheless, it is kept in the cache memory because it has already been preloaded. Image 504₂ is indeed out of current preload window due to current speed and CT but has been preloaded due to previous speed in a recent past. Furthermore, the algorithm keeps a few images in the cache memory that have already been presented because in the next moment the user may reverse the replay direction. This applies it to images 504₃ and 504₄ that have already been presented and are nevertheless kept in the cache memory.

Finally, Figure 11 displays a time diagram when the playout device is paused. In this situation the currently displayed image 504_{ITP} is continuously displayed and at the same time images in the past and in the future of image 504_{ITP} are preloaded because it cannot be predicted whether the playout will continue in forward or backward direction. The images in the past of image 504_{ITP} are images 504, and 504₂. The images in the future of image 504_{ITP} are images 504₃ and image 504₄.

### Closing remarks

Individual components or functionalities of the present invention are described in the embodiment examples as software or hardware solutions. However, this does not mean that a functionality described as a software solution cannot also be implemented in hardware and vice versa. Similarly, mixed solutions are also conceivable for a person skilled in the art, in which components and functionalities are simultaneously partially realized in software and hardware.

In the claims, the word "comprising" does not exclude other elements or steps, and the indefinite article "a" does not exclude a plurality. A single unit or device may perform the functions of multiple elements recited in the claims. The fact that individual functions and elements are recited in different dependent claims does not mean that a combination of those functions and elements could not advantageously be used.

### List of reference signs

| | | | |
|---|---|---|---|
| 100 | Production system | 502 | Ticks |
| 101 | Storage device | 503 | Ordinate |
| 102 | Camera | 504 | Image |
| 103 | Playout device | | |
| 104 | Control device | 1001 | curve |
| 106 | Control buttons | | |
| 107 | T-bar | | |
| 108 | Jog dial | | |
| 109 | Display | | |
| 110 | Fetcher | | |
| 111 | Processor | | |
| 112 | Control commands | | |
| 113 | Command | | |
| 114 | Command | | |
| 116 | Multi-view monitor wall | | |
| 200 | Production system | | |
| 201 | Playout device | | |
| 202 | Pre-loader | | |
| 203 | Cache memory | | |
| 204 | Inspection signal | | |
| 300 | Production system | | |
| 301 | Playout device | | |
| 302 | Preload orchestrator | | |
| 303 | Cache memory | | |
| 400 | Production system | | |
| 401 | Playout device | | |
| 501 | Abscissa | | |

## Claims

1. Playout device for a broadcast production system (300,400), wherein the broadcast production system comprises a storage device (101) for video streams and a control device (104) for receiving input from a user for selecting a stored video stream to be played out and for selecting a replay speed and replay direction for the played out video stream, wherein the control device (104) translates the user input into control commands to set corresponding playout parameters for the playout device (301,401) determining at least which stored video stream is to be played out at what playout speed and playout direction, wherein the playout device comprises a fetcher (110) and a processor (111;111a-c),
wherein the fetcher (110) requests from the storage device (101) images of the selected stored video stream, and
wherein the fetcher (110) is associated with a fetcher cache memory (203) making a number of images of the stored video stream available for the processor, **characterized in that**
the processor (111,111a-c) is associated with a processor cache memory (303,303a-c) containing at least one processed image for output by the playout device.

2. Playout device according to claim 1, wherein the fetcher cache memory (203) and the processor cache memory (303,303a-c) operate at different sampling rates.

3. Playout device according to claim 1 or 2, wherein the playout device comprises a preload orchestrator (302) receiving the control commands (112) from the control device (104), wherein the preload orchestrator (302) is configured to
- execute an algorithm to generate inspect signals for the fetcher and processor cache memories (203,303,303a-c) to determine their contents,
- send command signals to the fetcher (110) as a function of the determined contents of the fetcher cache memory (203) to request images from the storage device, which are likely to be needed next by the processor (111,111a-c), and
- send command signals to the processor (111,111a-c) as a function of the determined contents of the processor cache memory (303,303a-c) to request from the processor to process images which are played out next.

4. Playout device according to one of the preceding claims, wherein the fetcher cache memory (203) is located in a signal flow direction upstream from the processor cache memory (303,303a-c).

5. Playout device according to one of the preceding claims, wherein the processor comprises a plurality of processing elements (111a-c) executing software, wherein each processing element performs an elementary service providing one step of a desired processing functionality, wherein a concatenation of elementary services forms a processing pipeline implementing the desired processing functionality, and wherein each processing element (111a-c) is associated with its own processing cache memory (303a-c).

6. Playout device according to claim 5, wherein the playout device comprises an input of the processing pipeline to receive data from the storage device and an output of the processing pipeline for outputting processed video data, wherein the data flow from the input to the output of the processing pipeline defines a signal flow direction, wherein each processing cache memory is arranged downstream in signal flow direction relative to its associated processing element.

7. Playout device according to claims 5 or 6, wherein the first processing element (111a) in signal flow direction is configured to request data from the fetcher cache memory (203).

8. Playout device according to claim 7, wherein each processing element (111b-c) succeeding the first processing element (111a) in signal flow direction is configured to request data from the next upstream processing cache memory (111a-b).

9. Method for playout of video streams by a playout device according to one of the preceding claims, comprising
- preloading in the fetcher cache memory (203) images of a stored video stream from the storage device (101), wherein the stored video stream has a first frame rate;
- generating an output video stream including the requested stored video stream at a predetermined output frame rate for playout, wherein the output frame rate is different from or equal to the first frame rate.

10. Method according to claim 9, further comprising
- executing an algorithm for predicting images that are needed next in the generated output video stream.

11. Method according to claim 10, further comprising
- preloading the predicted images into the fetcher cache memory (203)
and/or
- processing the predicted images to be loaded into the processing cache memory (303,303a-c).

12. Method according to one or several of claims 9 to 11, further comprising
- keeping preloaded images in the fetcher cache memory (203) that have not yet been utilized in the composed output video stream.

13. Method according to one or several of claims 9 to 12, further comprising
- preloading in the fetcher cache memory (203) one or several images of the stored video stream preceding and succeeding a currently displayed image of the stored video stream in case the replay of the stored video stream is paused.

14. Method according to one or several of claims 9 to 12, further comprising
- repeating or skipping images of the stored video stream to adapt a flow of images of the stored video stream at the first frame rate to the output frame rate.
